# EUROPEAN PATENT APPLICATION

(11) **EP 2 674 280 A1**
(43) Date of publication of application: **18.12.2013**
(21) Application number: 12745064.1
(22) Date of filing: 07.02.2012
(51) Int. Cl.: B29C 63/32, F16L 1/00, F16L 55/16

(54) **TUBE MAKING APPARATUS, AND TUBE MAKING METHOD**

(30) Priority: 07.02.2011 JP 2011024122
(71) Applicant: Sekisui Chemical Co., Ltd., Osaka 530-8565 (JP)
(72) Inventor: YAMASAKI, Masahiro, Ritto-shi, Shiga 520-3027 (JP); NOZAKI, Yoshiharu, Ritto-shi, Shiga 520-3027 (JP); SUGAHARA, Hiroshi, Watertown, Connecticut 06795 (US)
(74) Representative: HOFFMANN EITLE
(86) International application number: PCT/JP2012/052756
(87) International publication number: WO 2012/108434

(57) **Abstract**

A winding machine (1) includes a frame (2), a drive unit (4), an introduction unit (5), and a guide member (6) of a plastic strip (100). The frame (2) is separable into a plurality of pieces. The drive unit (4) interposes a preceding part and a subsequent part of the plastic strip (100) in a joined state. The drive unit (4) transmits power to the plastic strip (100). The introduction unit (5) interposes the plastic strip (100) while spirally aligning the plastic strip (100). The introduction unit (5) includes a roller portion that does not transmit power at least to the subsequent part of the plastic strip (100). The drive unit (4) and the introduction unit (5) are disposed above a horizontal surface including a axial center of the frame (2).

## Description

### TECHNICAL FIELD

The present invention relates to a winding machine for pipe rehabilitation that rehabilitates an aging pipe and a winding method.

### BACKGROUND ART

The conventional winding machine includes drive roller portions rotated by a hydraulic motor at a plurality of portions. A rehabilitating pipe increases its weight as the rehabilitating pipes are formed. Additionally, since the rehabilitating pipe contacts an existing pipe, friction resistance with the existing pipe increases as a rehabilitating pipe is formed. Therefore, at the drive roller portion at the subsequent part among drive roller portions disposed at a plurality of portions, a driving force required to rotate the rehabilitating pipe gradually increases. In contrast to this, at the drive roller portion at the preceding part, a plastic strip is sent by a driving force that is equal to that of the initial state. As a result, a difference occurs between a rotation speed of the rehabilitating pipe and a supply speed of the plastic strip. That is, the plastic strip is excessively supplied compared with the formation speed of the rehabilitating pipe. This easily causes a problem that the pipe diameter of the rehabilitating pipe gradually increases.

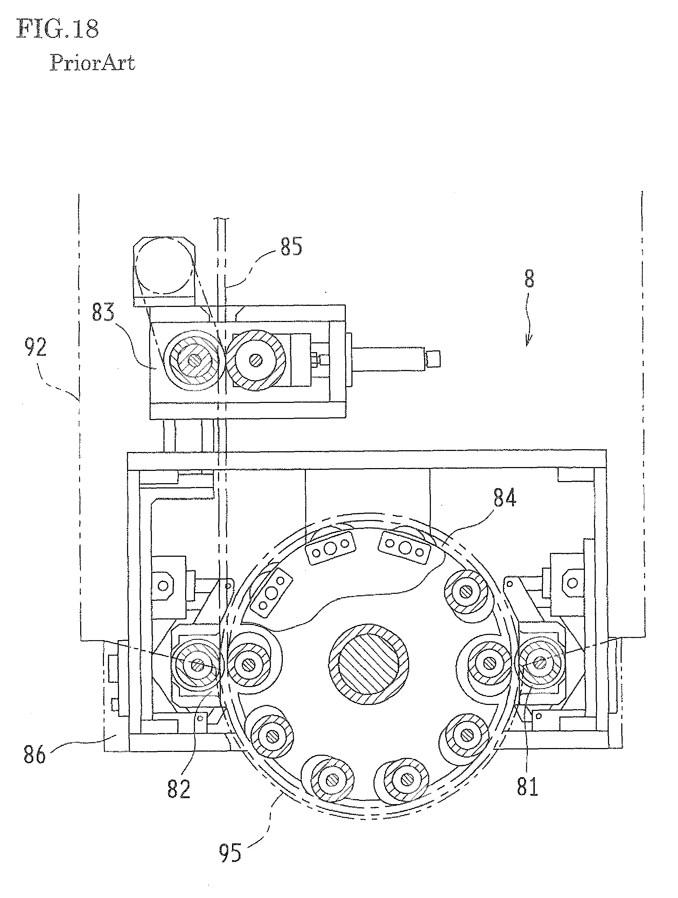

In contrast to this, a conventional winding machine 8 illustrated in FIG. 18 includes a tension roller portion 83 at the upper side of a supporting member as well as a plurality of drive roller portions 81 and 82 (for example, see Patent Literature 1). These plurality of drive roller portions 81 and 82 and tension roller portion 83 are rotatably driven by the respective individual hydraulic motors. Respective hydraulic motors are controlled to have mutually different rotation speeds. That is, the delivery speed of a plastic strip 85 is set slow between the tension roller portion 83 and the drive roller portion 82 compared with the portion between the drive roller portions 81 and 82. This aims to forcibly pressurize the plastic strip 85 to a mandrel 84 to make the pipe diameter of the rehabilitating pipe uniform.

### CITATION LIST

### PATENT LITERATURE

PATENT LITERATURE 1: Japanese Unexamined Patent Application Publication No. H1-156041

### SUMMARY OF INVENTION

### TECHNICAL PROBLEM

However, the above-described conventional winding machine 8 has problems described below, and there is room for improvement.

In the winding machine 8, the following problems arise. The driving forces of respective hydraulic motors for the drive roller portions 81 and 82 tend to decrease by the braking force of the tension roller portion 83, and a length of the rehabilitating pipe to be formed is short. Therefore, in the winding machine 8, a plurality of hydraulic motors need to be synchronously controlled, which requires a complex structure.

Additionally, the winding machine 8 has a structure where the rehabilitating pipe is formed by joining the plastic strip 85 from the outer periphery side. When a braking force by the tension roller portion 83 becomes slightly insufficient, the plastic strip 85 to be delivered causes looseness, which gradually increases the pipe diameter of the rehabilitating pipe. Therefore, the conventional problem is not sufficiently eliminated.

Further, the plurality of drive roller portions 81 and 82 are disposed on the mandrel 84 at an mutually horizontally opposed position about 180 degrees away. If the winding machine 8 is set up on an invert pit 95 in the manhole 92, the drive roller portions 81 and 82 interfere with the invert pit 95. Accordingly, the invert pit 95 and the periphery of the invert pit 95 need to be formed deep to form a housing space 86 for the drive roller portions 81 and 82. This decreases work efficiency.

The present invention has been made in view of these conventional problems. It is an object of the present invention to provide a winding machine configured without a complex structure with a fewer number of components and a winding method where a rehabilitating pipe with a desired pipe diameter can be precisely and constantly formed at a required length.

### SOLUTIONS TO THE PROBLEMS

This invention provides a winding machine for forming a rehabilitating pipe by spirally winding a plastic strip. The winding machine includes a frame, an introduction unit, a drive unit, and at least one guide member. The frame includes a plurality of plates and a plurality of rollers. The plurality of plates couples one another in a circumferential direction. The plurality of plates are combined in approximately a ring shape. The plurality of rollers are rotatably disposed between the plates facing one another. The frame is separable into a plurality of pieces. The introduction unit is disposed at the frame. The introduction unit includes an inner roller and an outer roller. The inner roller and the outer roller interpose a preceding part and a subsequent part of the plastic strip in a spirally aligned state. The inner roller and the outer roller include a roller portion. The roller portion does not transmit power at least to the subsequent part of the plastic strip. The drive unit is disposed at the frame. The drive unit includes an inner roller and an outer roller. The inner roller and the outer roller interpose a preceding part and a subsequent part of the plastic strip in a joined state. The inner roller and the outer roller transmit power to the plastic strip. The at least one guide member is disposed at the frame. The guide member guides the plastic strip. The introduction unit and the drive unit are disposed above a horizontal surface including a axial center of the frame.

The introduction unit is configured to spirally align the preceding part and the subsequent part without transmitting power to at least the subsequent part of the plastic strip. This allows the drive unit to smoothly draw the plastic strip using the driving force of the drive unit without reducing the driving force. In the introduction unit, the subsequent part of the plastic strip is guided to and drawn into the guide member, and disposed to the preceding part of the plastic strip so as to be adjacent from the inner peripheral side. The plastic strips are joined together in this state and form a rehabilitating pipe. This eliminates the nuisance of gradual increases in the pipe diameter of the rehabilitating pipe, thus forming accurately and stably a rehabilitating pipe with a desired pipe diameter. Further, the introduction unit is configured so as not to reduce the driving force of the drive unit. Therefore, the winding machine can be configured with a simple device structure compared with the conventional winding machine, and therefore a rehabilitating pipe with a longer pipe length than the conventional rehabilitating pipe can be efficiently and stably formed. Additionally, since the frame is separable, the frame can be disassembled and delivered to a pipe manufacturing site such as a manhole, work can be performed in a short time with enhanced versatility. When the winding machine is set up on an invert pit in the manhole, the invert pit, the introduction unit, and the drive unit do not interfere with one another. Accordingly, the winding machine can be installed without cutting the invert pit, work efficiency is improved, and the problems of the conventional winding machine are all eliminated.

In the winding machine, the following configuration is preferable. The introduction unit is configured to: position the plastic strip such that the preceding part and the subsequent part of plastic strip are mutually joined together; or position the preceding part and the subsequent part of the plastic strip in the position and mutually join them together.

This accurately joins the plastic strips adjacent to one another. The driving force of the drive unit is transmitted without any reduction, and the pipe diameter is not increased, thus allowing highly accurate pipe manufacturing.

In the winding machine, the following configuration is preferable. The introduction unit and the drive unit are disposed so as to arrange the drive unit after the introduction unit along a supply route of the plastic strip, and the drive unit draws the subsequent part of the plastic strip through the introduction unit.

Accordingly, in a process where the plastic strips are joined together and a rehabilitating pipe is formed, the drive unit interposes the plastic strip that has become the rehabilitating pipe, and sends out the plastic strip in the direction of the tube axis while rotating it. In accordance with the sending of the rehabilitating pipe, the subsequent part of the plastic strip is drawn into the introduction unit and spirally aligned. This allows accurate joining of the plastic strips and continuous stable pipe manufacturing.

In the winding machine, the following configuration is preferable. The drive unit includes a reducer and a motor. The drive unit rotates two rollers in mutually opposite directions.

This allows rotatably driving the two rollers without configuring a complicated structure. The driving force of the motor can be efficiently transmitted to the rehabilitating pipe and the plastic strip.

In the winding machine, the following configuration is preferable. The guide members are disposed at a plurality of positions at the frame so as to define a supply route of the plastic strip at an inner peripheral side of the outline of the frame.

Thus, since the plastic strip is supplied through the inner peripheral side of the outline of the frame, the plastic strip is guided smoothly to the introduction unit without interference from an existing pipe or manhole.

In the winding machine, the following configuration is preferable. The winding machine further includes a cradle that supports the frame in a state where the frame is suspended.

This ensures a stable installation state and also avoids friction resistance caused by contacting the plastic strip to the existing pipe and the manhole, thus allowing smoothly winding the plastic strip to the frame to accurately manufacture a pipe.

In the winding machine, the following configuration is preferable. The frame includes a first adjustment mechanism that is disposed on at least one portion among coupling portions between the plates. The first adjustment mechanism adjusts a distance between the plates in a circumferential direction.

Accordingly, the outer diameter of the frame can be configured according to the pipe diameters of the rehabilitating pipe and the existing pipe, and the contour length can be adjusted as necessary. This ensures an increased versatility.

In the winding machine, the following configuration is preferable. The frame includes a second adjustment mechanism at one portion among coupling portions between the plates. The second adjustment mechanism shifts the plates one another in the direction of the axis.

This allows smooth winding of the plastic strip spirally along the frame according to the width of the plastic strip, the pipe diameter of the rehabilitating pipe, or other specifications. This ensures increased versatility.

Additionally, a winding method that employs the winding machine with the above-described constitution is also within the technical scope of the present invention. That is, a winding method of the present invention by forming a plastic strip into a rehabilitating pipe includes: installing a winding machine that forms and rotates the rehabilitating pipe at an end portion of a pipe line to be rehabilitated; and supplying a plastic strip to the winding machine. The plastic strip is supplied through a route that passes through an inner peripheral side on an outer extension of the rehabilitating pipe. In a process where the plastic strip is sent forward of the supply route, the method further includes: sending a subsequent part of the plastic strip to the preceding part of the plastic strip from the inner peripheral side of the preceding part and aligning the preceding part and the subsequent part spirally; joining the subsequent part from the inner peripheral side of the preceding part of the aligned plastic strip to form a rehabilitating pipe; and sending out the rehabilitating pipe in a pipe line by rotating the rehabilitating pipe while drawing the subsequent part of the plastic strip to the winding machine.

Thus, the subsequent part of the plastic strip is supplied through a route that passes through the inner peripheral side on the outer extension of the rehabilitating pipe and disposed adjacent to the preceding part of the plastic strip. Without interference from an existing pipe or a manhole in the process, the plastic strip is smoothly guided. The plastic strip is not excessively supplied or insufficiently supplied, but preferably supplied. Since the subsequent part of the plastic strip is joined to the preceding part from the inner peripheral side, the nuisance of gradual increase in the pipe diameter of the formed rehabilitating pipe does not occur, and the rehabilitating pipe with a desired pipe diameter can be accurately and stably formed.

In the winding method, the following configuration is preferable. The plastic strips include a main joining portion and a sub joining portion. The method includes: mutually joining the preceding portion and the subsequent portion together from an inner peripheral side of the plastic strip; and subsequently joining the main joining portion and the sub joining portion together.

Accordingly, the plastic strips can be joined together by two steps. This allows secure joining and the formation of the rehabilitating pipe with high strength and high reliability.

### BRIEF DESCRIPTION OF DRAWINGS

[Fig. 1] FIG. 1 is a cross-sectional view illustrating an underground pipe line rehabilitated using a winding machine according to the present invention.
[Fig. 2] FIG. 2 is a perspective view illustrating a winding machine according to one embodiment.
[Fig. 3] FIG. 3 is a front view of the winding machine of FIG. 2.
[Fig. 4] FIG. 4 is a perspective view illustrating a first coupling member of a frame in the winding machine.
[Fig. 5] FIGS. 5(a) and 5(b) illustrate the frame, FIG. 5(a) illustrates a front view of the frame, and FIG. 5(b) illustrates a plan view of the frame.
[Fig. 6] FIG. 6 illustrates a perspective view illustrating a second coupling member of the frame in the winding machine.
[Fig. 7] FIG. 7 illustrates a side view when an introduction unit constituting the winding machine is viewed from the arrow X direction in FIG. 3.
[Fig. 8] FIG. 8 is an explanatory view illustrating a drive unit in the winding machine.
[Fig. 9] FIG. 9 is a perspective view illustrating a state where a rehabilitating pipe is formed with the winding machine.
[Fig. 10] FIG. 10 is an explanatory view schematically illustrating the winding machine and a winding method according to the present invention.
[Fig. 11] FIG. 11 is a schematic perspective view illustrating a state where the winding machine is set up on an invert pit in a manhole.
[Fig. 12] FIG. 12 is a front view illustrating the winding machine according to another embodiment.
[Fig. 13] FIG. 13 is an explanatory view illustrating an introduction unit in the winding machine of FIG. 12.
[Fig. 14] FIG. 14 is a perspective view illustrating the winding machine and the winding method according to another embodiment.
[Fig. 15] FIGS. 15(a) and 15(b) are explanatory views illustrating one exemplary plastic strip, FIG. 15(a) illustrates a state of joining, and FIG. 15(b) illustrates a state after joining.
[Fig. 16] FIG. 16 is an explanatory view illustrating another exemplary plastic strip.
[Fig. 17] FIGS. 17A and 17B are explanatory views illustrating yet another exemplary plastic strip, FIG. 17A illustrates a state after joining, and FIG. 17B illustrates a joining portion of the plastic strip.
[Fig. 18] FIG. 18 is a front view where the conventional winding machine is illustrated by a partial cross section.

### DESCRIPTION OF EMBODIMENTS

Hereinafter, embodiments of a winding machine and a winding method according to the present invention will be described with reference to the accompanying drawings.

### winding machine

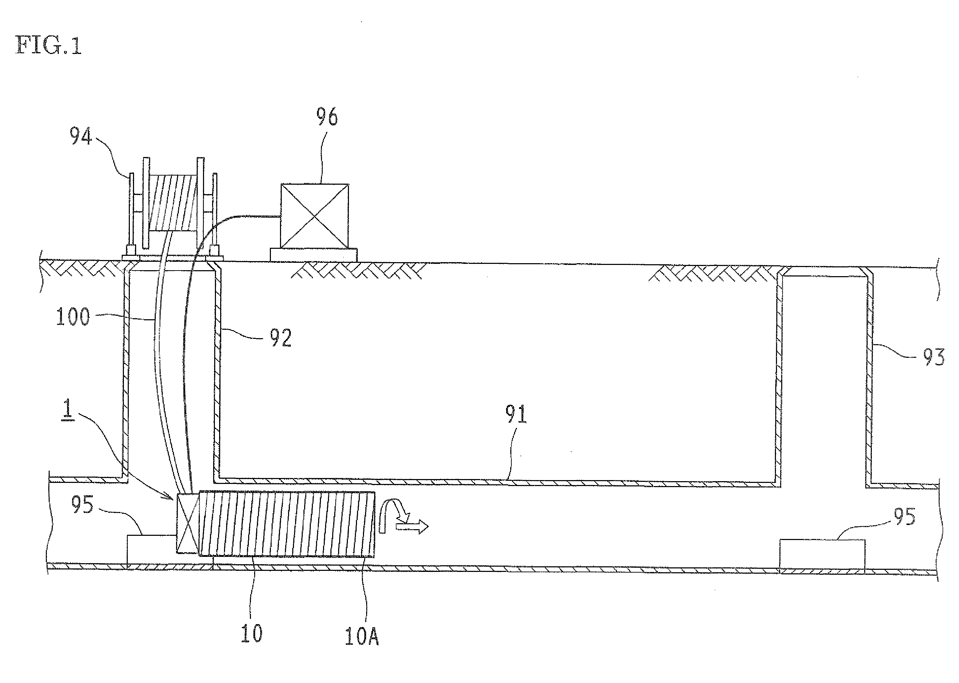

As illustrated in FIG. 1, a winding machine 1 continuously draws a plastic strip 100 and winds the plastic strip 100 spirally. The plastic strip 100 is disposed adjacent one another and mutually joined together with the winding machine 1. Thus, the plastic strip 100 forms a rehabilitating pipe 10. Additionally, the winding machine 1 rotates the rehabilitating pipe 10 in the circumferential direction and sends out the rehabilitating pipe 10 to the front of an existing pipe 91 in the axial direction. Simultaneously, the subsequent part of the plastic strip 100 is joined to this rehabilitating pipe 10, thus the rehabilitating pipe 10 is additionally formed.

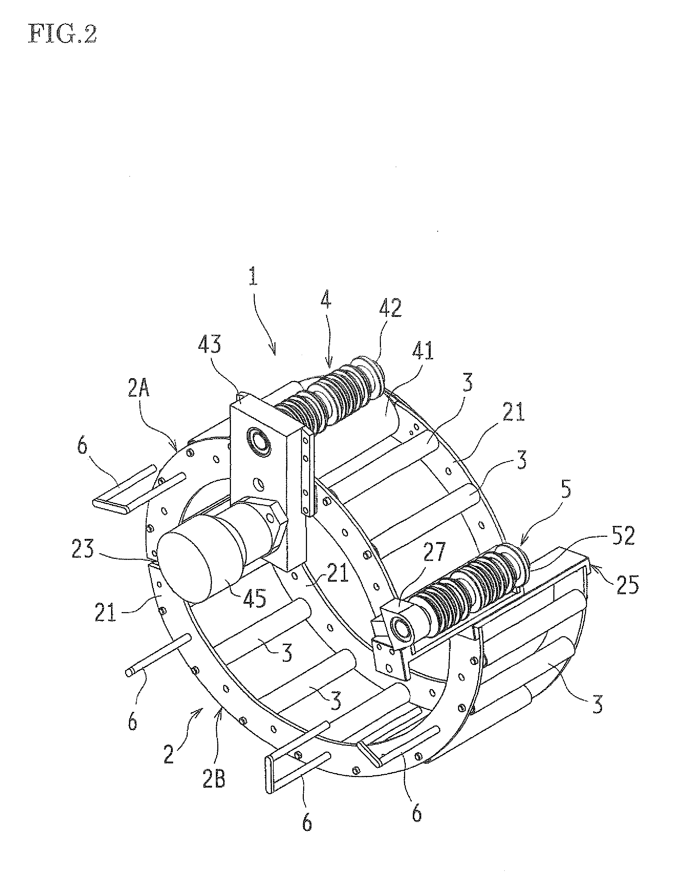

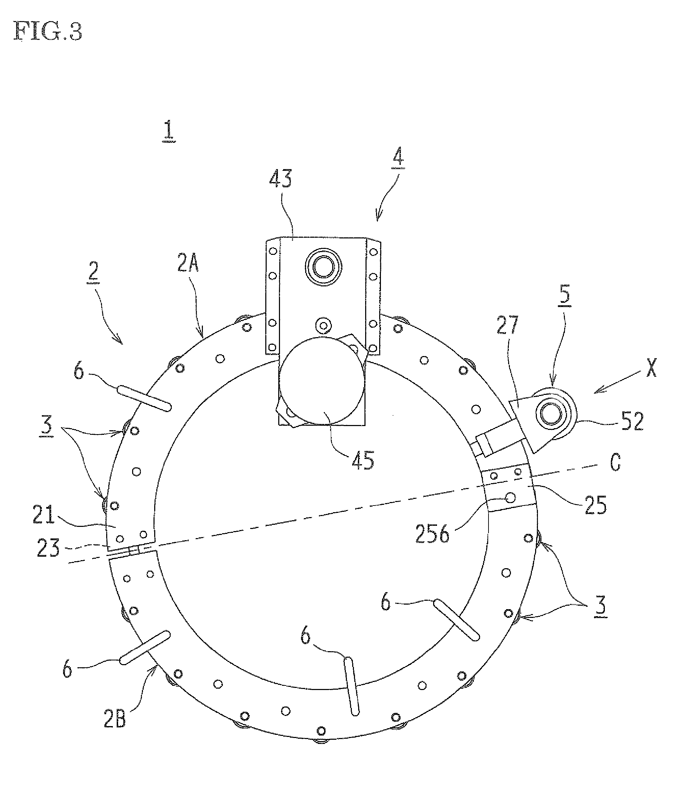

Specifically, as illustrated in FIG. 2 and FIG. 3, the winding machine 1 includes a drive unit 4 and an introduction unit 5 disposed at the frame 2 and a frame 2.

The frame 2 includes a pair of front and back ring-shaped plates 21 and a plurality of rollers 3 disposed between these ring-shaped plates 21. These ring-shaped plates 21 are disposed on the front and the back spacing a distance of approximately almost two times the width of the plastic strip 100. The ring-shaped plate 21 is formed by a plurality of plate materials and is integrally coupled with a plurality of coupling members 23 and 25.

As illustrated in FIG. 3, the ring-shaped plate 21 is dividable at an inclined surface C to form two portions: an upper half portion 2A and a lower half portion 2B. The inclined surface C is a surface where a horizontal surface that passes through the center of the ring-shaped plate 21 is slightly rotated counterclockwise when the winding machine 1 is viewed from the front. Further, end edge portions of the upper half portion 2A and the lower half portion 2B, which are mutually separated approximately 180 degrees, are coupled with the coupling member 23 or the coupling member 25.

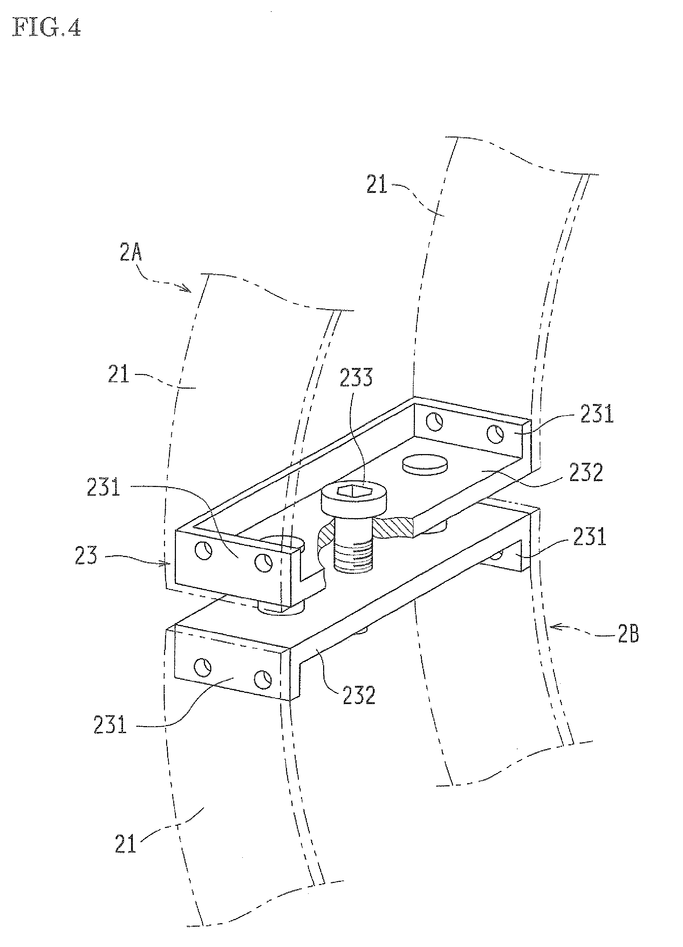

As illustrated in FIG. 4, a first coupling member 23 is configured with a set of two pieces. The first coupling member 23 includes front and back joining plates 231 and a coupling plate 232. The front and back joining plates 231 join the end portions of the ring-shaped plates 21. The coupling plates 232 couple between these joining plates 231. The joining plate 231 has a plurality of bolt holes to join the ring-shaped plates 21. The coupling plate 232 determines the distance of the pair of front and back ring-shaped plates 21. The two coupling members 23 are coupled at a plurality of portions on the coupling plates 232. This supports the coupling plates 232 in mutually parallel.

With an exemplary configuration, a mutual distance between the two coupling members 23 can be adjusted by the amount of tightening of a center bolt 233, which couples the coupling plates 232. This allows coupling of the upper half portion 2A and the lower half portion 2B while adjusting a distance between them and also allows adjustment of the contour length of the frame 2. A coil spring is interposed in the shaft portion of the bolt 233 to cause an elastic force between the two coupling members 23, thus facilitating the adjustment.

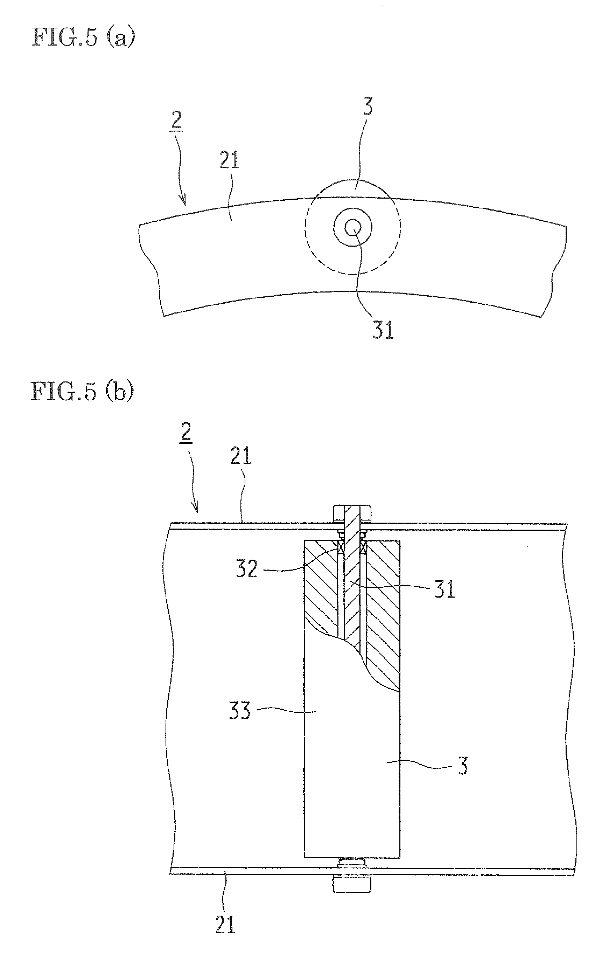

A plurality of rollers 3 are rotatably supported at the frame 2 spacing a distance in the circumferential direction. As illustrated in FIG. 5(a) and FIG. 5(b), the roller 3 is rotatably supported to a rotating shaft 31 via a bearing 32. The rotating shaft 31 is disposed across the front and back ring-shaped plates 21. The roller 3 is formed by a roller body made of synthetic resin or metal. The roller 3 is formed at a length approximately almost two times a width of the plastic strip 100. The outer diameter of the roller 3 is set such that the outer peripheral surface is positioned slightly outward of the outer periphery line of the ring-shaped plate 21. This puts the roller 3 in contact with a flat surface of the plastic strip 100, that is, an inner peripheral surface of the rehabilitating pipe 10. The roller 3 allows the plastic strip 100 to be smoothly wound, thus reducing contact friction as much as possible.

The roller 3 is disposed to form a right angle with respect to a lead angle of the plastic strip 100 constituting the rehabilitating pipe 10. In view of this, the formed rehabilitating pipe 10 in the existing pipe 91 can be sent out to the front (the pipe manufacturing direction) with the drive unit 4.

These rollers 3 are disposed at a right angle with respect to the lead angle of the plastic strip 100 as follows. For example, as illustrated in FIG. 2 and FIG. 3, the upper half portion 2A and the lower half portion 2B are shifted in the axial direction and coupled at one coupling portion positioned above the horizontal surface that passes through the center of the ring-shaped plate 21 among the coupling portions that couple the upper half portion 2A and the lower half portion 2B of the frame 2.

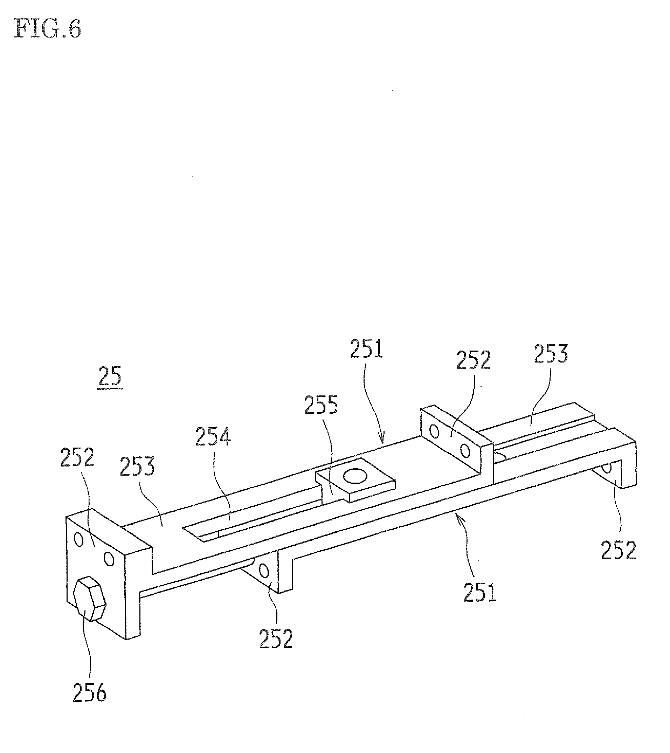

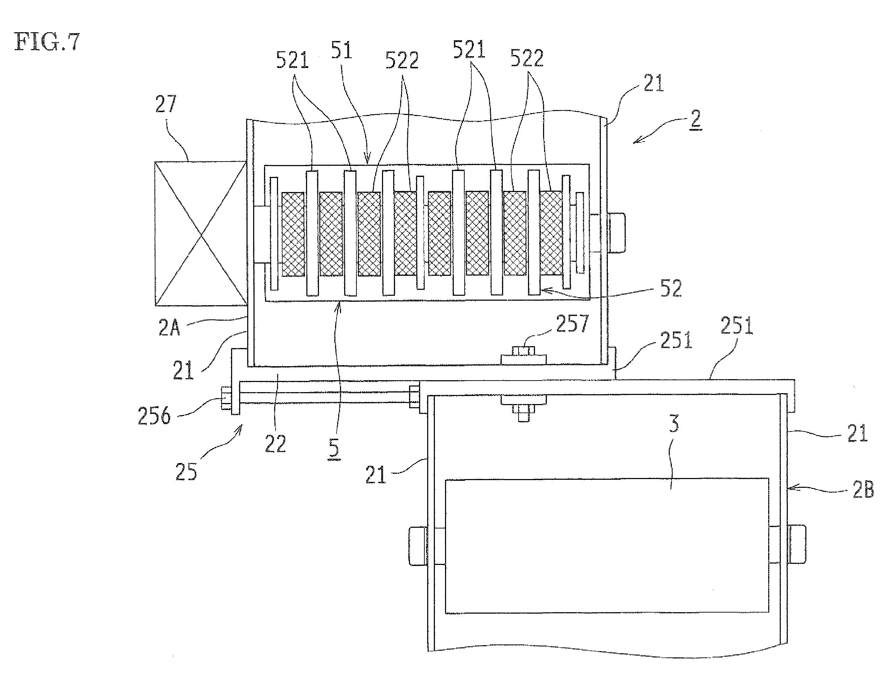

As one example, FIG. 6 and FIG. 7 illustrate the second coupling member 25 with an adjustment mechanism. The second coupling member 25 with an adjustment mechanism couples the pair of front and back ring-shaped plates 21 shifting them to the axial direction (the pipe axial direction of the rehabilitating pipe 10).

The second coupling member 25 includes two coupling bodies 251, which are coupled to be mutually slidable. Each coupling body 251 includes a joining plate 252 and a coupling plate 253. The joining plate 252 joins the end portions of the ring-shaped plates 21. The coupling plate 253 connects between these joining plates 252. One of the coupling body 251 couples the ring-shaped plates 21 constituting the upper half portion 2A and maintains its mutual distance. The other coupling body 251 couples the ring-shaped plates 21 constituting the lower half portion 2B and maintains its mutual distance. Additionally, one coupling body 251 includes a slide groove 254 while another coupling body 251 includes a slider 255 to be engaged with the slide groove 254.

The second coupling member 25 includes a long bolt 256. The long bolt 256 is disposed from the end portion of one coupling body 251 in contact with the joining plate 252 of the other coupling body 251. Rotation of the long bolt 256 adjusts the amount of slide of the coupling body 251. The mutually sliding coupling bodies 251 can be secured with a bolt 257 of the slider 255.

This couples the upper half portion 2A and the lower half portion 2B and allows the coupling bodies 251 to slide to the pipe axial direction for adjustment while maintaining the mutual distance of the ring-shaped plate 21 in the pipe axial direction. That is, with respect to the upper half portion 2A, the lower half portion 2B can be moved by a length approximately corresponding to the width of the plastic strip 100 in the pipe manufacturing direction. Then, with the lower half portion 2B moved, the upper half portion 2A and the lower half portion 2B are coupled, thus the frame 2 is formed.

Such frame 2 is delivered to the manhole 92 in a state vertically divided into two of the upper half portion 2A and the lower half portion 2B and is assembled to form into a ring at a pipe manufacturing position. This allows installation of the winding machine 1 efficiently in a short time.

The upper half portion 2A of the frame 2 includes the drive unit 4 and the introduction unit 5.

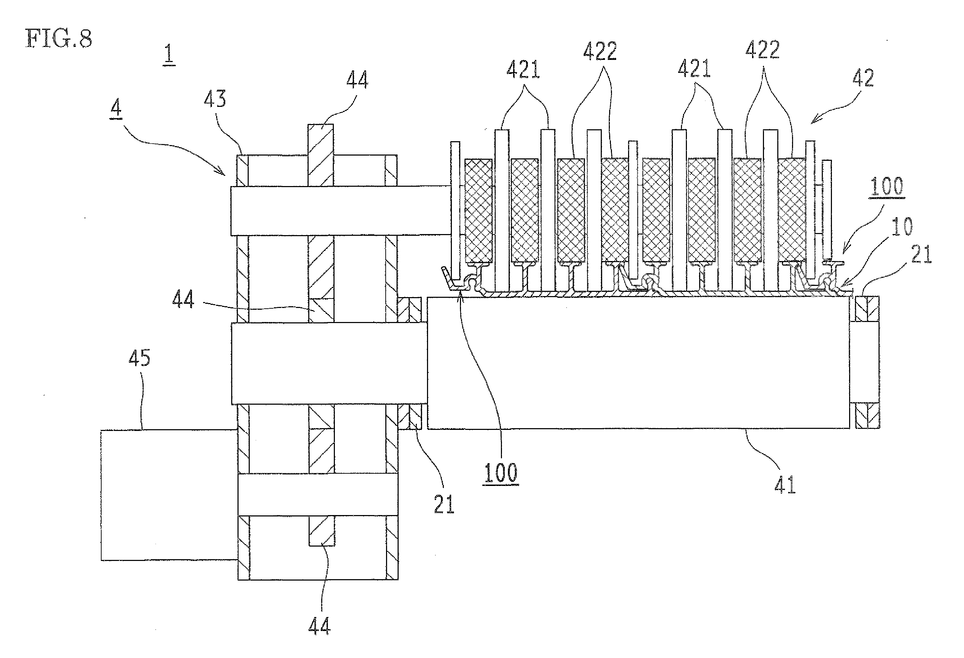

Among these, the drive unit 4 is mounted at approximately the top of the upper half portion 2A. The drive unit 4 interposes the spiral plastic strip 100 at both surfaces and sends it out. The spiral plastic strip 100 goes along the plurality of rollers 3. This regulates the inner diameter of the spiral plastic strip 100. As illustrated in FIG. 8, the drive unit 4 includes a paired inner drive roller 41 and outer drive roller 42. Additionally, the drive unit 4 includes a hydraulic motor 45. The hydraulic motor 45 rotates and drives the inner drive roller 41 and the outer drive roller 42 in mutually opposite directions via a reducer (for example, a gear 44 of a gear box 43) secured to the frame 2.

The rotating shaft of the inner drive roller 41 and the rotating shaft of the outer drive roller 42 are disposed such that the shaft line direction of the rotating shafts is perpendicular to the lead angle of the rehabilitating pipe 10. Each of these rotating shafts is rotatably supported by the gear box 43 along with an output shaft of the hydraulic motor 45. Therefore, when the hydraulic motor 45 is rotatably driven, the gears 44, which are secured to the output shaft, the rotating shaft of the inner drive roller 41, and the rotating shaft of the outer drive roller 42 and engage one another, rotate the inner drive roller 41 and the outer drive roller 42 in mutually opposite directions. The inner drive roller 41 and the outer drive roller 42 interpose the plastic strip 100, and sends out the plastic strip 100 to the front along a plurality of rollers 3 disposed at the frame 2.

Both ends of the rotating shaft of the inner drive roller 41 are rotatably supported with the front and back ring-shaped plates 21. The rotating shaft of the outer drive roller 42 is rotatably cantilevered with the gear box 43 disposed at the front ring-shaped plate 21.

The inner drive roller 41 has a length approximately almost two times the width of the plastic strip 100. The inner drive roller 41 is formed in a cylindrical shape by a material such as iron. The outer diameter of the inner drive roller 41 is set such that the inner drive roller 41 rotates while the outer peripheral surface of the inner drive roller 41 makes contact with the smooth inner peripheral surface of the rehabilitating pipe 10.

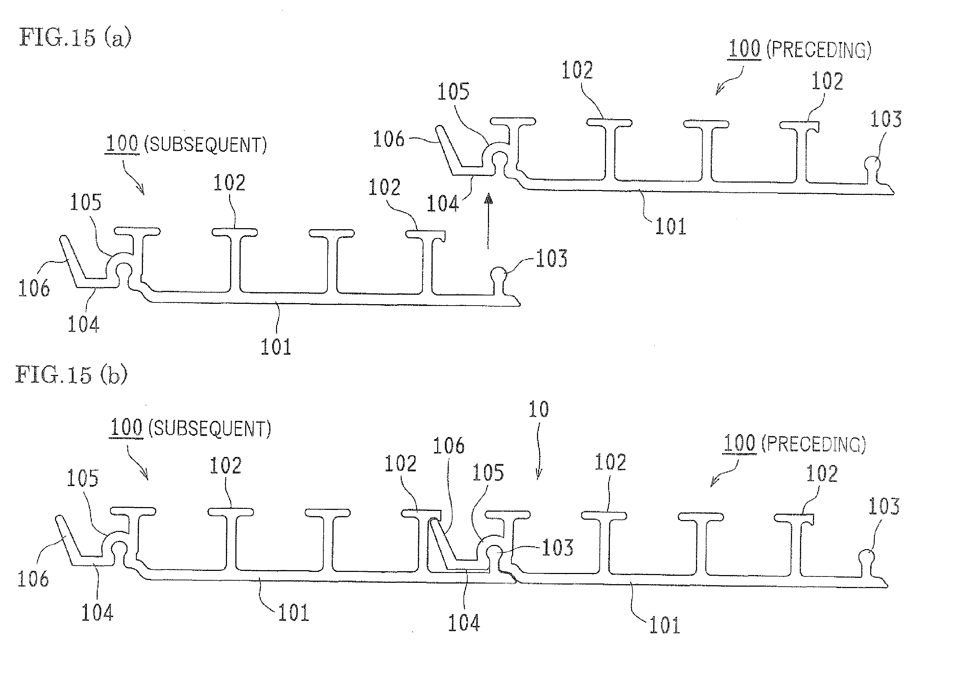

The exemplary plastic strip 100 includes a plurality of ribs 102, which form a T shape in the cross section, at a strip plate-shaped substrate 101 (see FIG. 15(a)). A joint convex portion 103 is disposed upright at one side edge portion of the substrate 101. The substrate 101 includes a step portion 104 on another side edge portion. The step portion 104 corresponding to the thickness of the substrate 101 is formed to accommodate the side edge portion of the substrate 101 where the joint convex portion 103 is formed. The step portion 104 includes a joint concave portion 105 where the joint convex portion 103 is to be engaged. Additionally, the plastic strip 100 may include an inclined rib 106. The inclined rib 106 is inclined so as to be positioned at the protruding side of the joint concave portion 105 with increasing distance from the substrate 101. The inclined rib 106 locks the rib 102 of the adjacent plastic strip 100.

The outer drive roller 42 includes a plurality of large diameter rollers 421 and a plurality of small diameter rollers 422. The large diameter roller 421 has a width that can be inserted between the adjacent ribs 102 of the plastic strip 100 and is disposed at the rotating shaft. The large diameter roller 421 rotates while its outer peripheral surface contacts the back surface of the substrate 101 of the plastic strip 100 (the surface at the side that becomes the outer peripheral surface of the rehabilitating pipe 10) between the adjacent ribs 102 of the plastic strip 100.

The small diameter rollers 422 are formed corresponding to the apical surface (approximately T-shaped part) of the respective ribs 102 of the plastic strip 100, and are disposed at the rotating shaft. The outer peripheral surface of the small diameter roller 422 rotates in contact with the apical surface of the rib 102 of the plastic strip 100. Knurling is performed on the outer peripheral surface of the small diameter roller 422. Thus, the outer drive roller 42 sends out the joined plastic strip 100 (the rehabilitating pipe 10) without sliding.

In the winding machine 1, a driving source that rotates the inner drive roller 41 and the outer drive roller 42 of the drive unit 4 is not limited to the hydraulic motor 45, but an electric motor and an air motor are also applicable. As a reducer, a chain sprocket or similar component may be employed instead of the gear 44.

The introduction unit 5 is, as illustrated in FIG. 2, disposed at the former and preceding part of the drive unit 4 at the upper half portion 2A of the frame 2. The introduction unit 5 interposes the spiral plastic strip 100, and positions the plastic strip 100 to the joining position of the joint concave portion 105 and the joint convex portion 103 of the plastic strip 100 or positions and joins them.

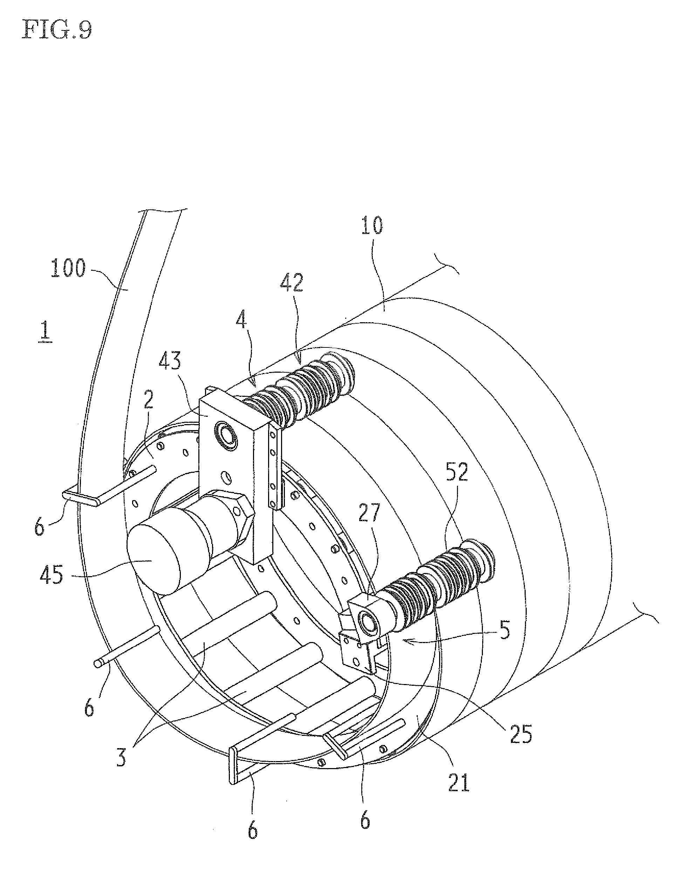

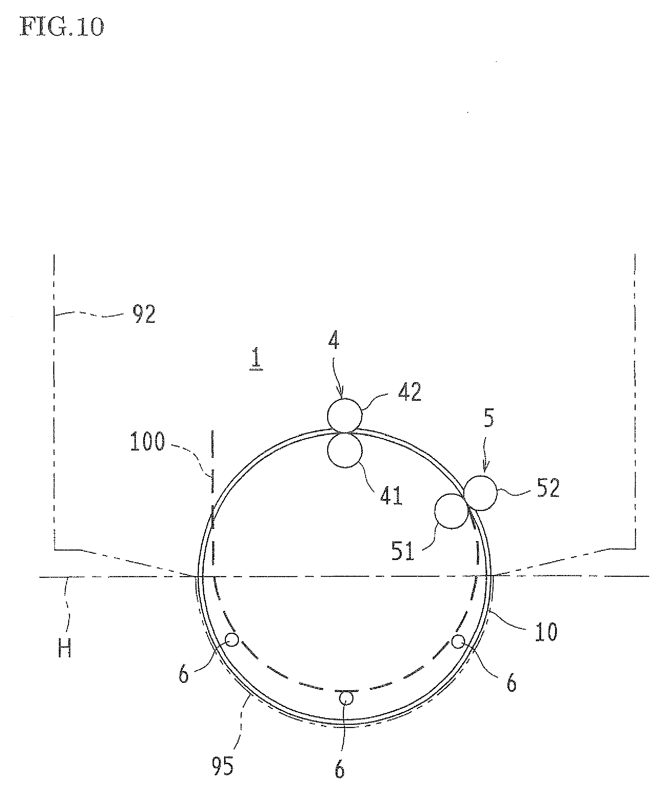

The introduction unit 5 includes, as illustrated in FIG. 2 and FIG. 7, an inner roller 51 and an outer roller 52, which are configured in combination. As illustrated in FIG. 9, the introduction unit 5 is at the upper half portion 2A of the frame 2. The introduction unit 5 is installed at the former part of the drive unit 4, that is, at the upper stream side in the sending direction of the plastic strip 100. As illustrated in FIG. 10, the introduction unit 5 and the drive unit 4 are disposed above a horizontal surface H including the center of the frame 2 (and the rehabilitating pipe 10).

The rotating shaft of the inner roller 51 and the rotating shaft of the outer roller 52 are disposed such that the shaft line direction of the rotating shafts is orthogonal to the lead angle of the rehabilitating pipe 10. Both ends of the rotating shaft of the inner roller 51 are rotatably supported by the front and back ring-shaped plates 21. The rotating shaft of the outer roller 52 is rotatably cantilevered with a supporting member 27 disposed at the front ring-shaped plate 21.

The introduction unit 5 does not include a power source to rotate these inner roller 51 and outer roller 52. The plastic strip 100 is drawn and interposed between the inner roller 51 and the outer roller 52. In accordance with extraction of the plastic strip 100 with the drive unit 4, the inner roller 51 and the outer roller 52 rotate mutually in opposite directions.

The inner roller 51 has a length approximately almost two times a width of the plastic strip 100. The inner roller 51 is formed in a cylindrical shape by a material such as iron. The outer diameter of the inner roller 51 is set such that the inner roller 51 rotates while the outer peripheral surface of the inner roller 51 makes contact with the smooth inner peripheral surface of the rehabilitating pipe 10. This positions the joint concave portion 105 of the preceding plastic strip 100 and the joint convex portion 103 of the subsequent spiral plastic strip 100 of the rehabilitating pipe 10 to the joining position, and joins them.

It is preferred that the outer roller 52 include a plurality of large diameter rollers 521 and a plurality of small diameter rollers 522 similarly to the above-described outer drive roller 42. The large diameter roller 521 rotates while its outer peripheral surface contacts the back surface of the substrate 101 of the plastic strip 100, which is the surface of the side that becomes the outer peripheral surface of the rehabilitating pipe 10. The small diameter roller 522 rotates while its outer peripheral surface contacts the apical surface of the rib 102 of the plastic strip 100 at the side that becomes the outer peripheral surface of the rehabilitating pipe 10. Knurling is performed on the outer peripheral surface of the small diameter roller 522. The outer roller 52 may be a cylindrical roller similarly to the inner roller 51.

As described above, the drive unit 4 rotates and sends out the rehabilitating pipe 10 where the plastic strip 100 has been joined. In contrast to this, the introduction unit 5 smoothly draws the subsequent part of the plastic strip 100 without generating resistance while aligning the subsequent part with the preceding part of the plastic strip 100, which has become the rehabilitating pipe 10, by the actuation of the drive unit 4. The frame 2 forms a space by coupling the upper half portion 2A and the lower half portion 2B by shifting them in the pipe axial direction. The plastic strip 100 is drawn into the introduction unit 5 through this space. Thus, the subsequent part of the plastic strip 100 is sent from the introduction unit 5 to the drive unit 4.

The frame 2 includes a plurality of guide members 6 to guide the plastic strip 100 to the introduction unit 5. The guide member 6 is, as illustrated in FIG. 2 and FIG. 9, formed by coupling a plurality of bar-shaped bodies or plate-shaped bodies into a rectangular shape. The guide member 6 internally includes a space corresponding to the size of the plastic strip 100. Thus, the guide member 6 positions the plastic strip 100 without variation of both front and back surfaces and the side edge portions of the plastic strip 100. The plastic strip 100 is inserted through the guide member 6 and held, thus guided to the introduction unit 5. A bar-shaped body constituting the guide member 6 may be a rotatable roller. Additionally, the constitution of the guide member 6 is not limited to the above-described constitution. The guide member 6 may have a constitution where two frame bodies are assembled to form into an L shape and the guide member 6 guides the end portion of the plastic strip 100.

One end portion of each of the plurality of guide members 6 is attached to the ring-shaped plate 21 of the frame 2. The guide member 6 is evenly disposed at the ring-shaped plate 21. The plastic strip 100 is supplied from a drum 94, and as illustrated in FIG. 9 and FIG. 10, first, is guided to the guide member 6 attached to the upper half portion 2A, and then guided to the plurality of guide members 6 disposed at the lower half portion 2B in this order. Thus, the plastic strip 100 includes a supply route at the inner peripheral side (that is, the inner peripheral side on the outer extension of the rehabilitating pipe 10) compared to the outline of the frame 2.

The introduction unit 5 interposes both the plastic strip 100 drawn through the guide member 6 (the subsequent part) and the plastic strip 100 of the rotating rehabilitating pipe 10 (the preceding part). The plastic strip 100 drawn into the introduction unit 5 rotates the inner roller 51 and the outer roller 52 of the introduction unit 5 in mutually opposite directions. This sends the plastic strip 100 and the adjacent rehabilitating pipe 10 to the drive unit 4.

In the introduction unit 5, when the plastic strip 100 is sent out, the joint convex portion 103 of the subsequent plastic strip 100 and the joint concave portion 105 of the preceding plastic strip 100 are disposed at the position where the joint convex portion 103 and the joint concave portion 105 can be mutually joined together. Simultaneously, these are mutually joined together to form into a pipe.

The introduction unit 5 may be configured to simply position the plastic strip 100 to a position where joining is allowed without joining. In that case, another mechanism that joins the plastic strip 100 is preferred to be disposed somewhere in a route where the plastic strip 100 that has passed through the introduction unit 5 reaches the drive unit 4. For example, a joining mechanism may be disposed between the introduction unit 5 and the drive unit 4. The joining mechanism subsequent to the introduction unit 5 includes a set of rollers that join the plastic strip 100. Further, the configuration is not limited to the above-described configuration, but the following configuration is also applicable. The joint convex portion 103 and the joint concave portion 105 of the plastic strip 100 are joined at the introduction unit 5. In the joining mechanism at the subsequent part, the inclined rib 106 of the plastic strip 100 may be locked to the rib 102.

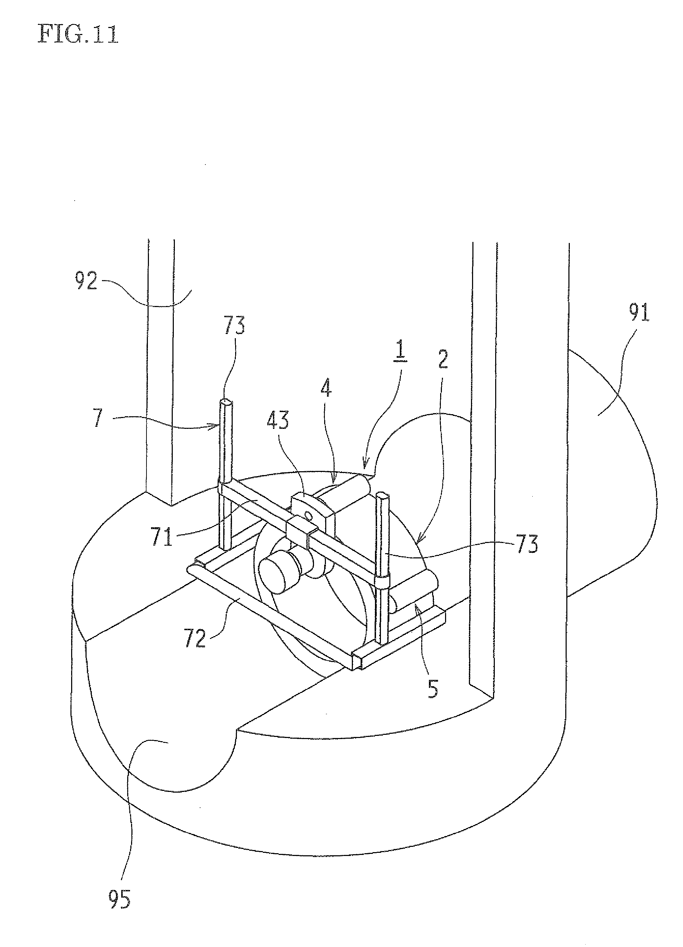

In the winding machine 1, the frame 2 is preferably supported by a cradle 7. As illustrated in FIG. 11, the cradle 7 includes a plurality of horizontal members 71 and 72 and a plurality of support pillars 73. The gear box 43 is secured to the horizontal member 71 where both end portions are supported by the support pillars 73. This supports the frame 2 of the winding machine 1. Adjusting the coupling height of the support pillar 73 and the horizontal member 71 allows supporting the suspended frame 2.

### Winding Method

Next, a description will be given of a method for forming the rehabilitating pipe 10 employing the above-described winding machine 1.

As illustrated in FIG. 1, the existing pipe 91 includes manholes 92 and 93 at a predetermined span. The rehabilitating pipe 10 is, for example, manufactured from one manhole 92 to another manhole 93 of the existing pipe 91. The drum 94 and a power unit 96 are installed on the ground at the starting side manhole 92 side. As illustrated in FIG. 11, the cradle 7 that supports the winding machine 1 is installed to an invert pit 95 of the starting side manhole 92.

The frame 2 is delivered into the starting side manhole 92 divided into two by the upper half portion 2A, which includes the introduction unit 5 and the drive unit 4, and the lower half portion 2B. The frame 2 is assembled into a ring in the starting side manhole 92. At this time, the outer diameter of the frame 2 is set according to the pipe diameter of the rehabilitating pipe 10.

The frame 2 of the winding machine 1 is secured to the cradle 7 via the gear box 43. At this time, the positions of the winding machine 1 in the vertical direction and the horizontal direction are adjusted, and the winding machine 1 is secured in a suspended state with respect to the invert pit 95. A hydraulic pressure pipe from the power unit 96 is coupled to the hydraulic motor 45 of the drive unit 4.

After such preparatory work is completed, the plastic strip 100 is extracted from the outer periphery side of the drum 94 disposed on the ground and drawn into the starting side manhole 92. The distal end portion of the plastic strip 100 is inserted through the guide member 6 disposed at the frame 2, and the plastic strip 100 is guided to the introduction unit 5 of the winding machine 1. Then, the plastic strip 100 is inserted between the inner roller 51 and the outer roller 52 of the introduction unit 5.

Next, the distal end portion of the plastic strip 100 is inserted between the inner drive roller 41 and the outer drive roller 42 of the drive unit 4, and the plastic strip 100 is sent to the outer periphery side of the roller 3 of the frame 2. After that, the hydraulic motor 45 rotatably drives to rotatably drive the inner drive roller 41 and the outer drive roller 42 in mutually opposite directions to send out the interposed plastic strip 100.

The sent plastic strip 100 is wound along the roller 3. The plastic strip 100 is spirally wound. When the distal end portion of the plastic strip 100 reaches the introduction unit 5 again, the plastic strip 100 is deviated to the arrival side manhole 93 side by the amount corresponding to the width. Accordingly, the distal end portion of the plastic strip 100 can be inserted through the introduction unit 5 again.

At this time, as illustrated in FIG. 15(a) and FIG. 15(b), the joint convex portion 103 of the plastic strip 100 at the subsequent side is engaged to the joint concave portion 105 of the plastic strip 100 at the preceding side from the inner peripheral side (the main joining portion). Simultaneously, the side edge portion of the substrate 101 of the subsequent plastic strip 100 (the side where the joint convex portion 103 is disposed) is disposed at the step portion 104 of the preceding plastic strip 100. The rib 102 at the side where the joint convex portion 103 of the subsequent plastic strip 100 is disposed is locked to the inclined rib 106 of the preceding plastic strip 100 (the sub joining portion). This joins the adjacent plastic strip 100.

Next, the joined adjacent plastic strips 100 are inserted through the drive unit 4 to form a rehabilitating pipe 10A for starting. That is, the hydraulic motor 45 of the drive unit 4 is driven, and the adjacent plastic strips 100, which have been joined to one another, are sent out. Furthermore, the plastic strip 100 is wound along the roller 3 and passed through the introduction unit 5 and the drive unit 4 in this order several times to form the rehabilitating pipe 10A.

The hydraulic motor 45 of the drive unit 4 of the winding machine 1 continuously drives. The inner drive roller 41 and the outer drive roller 42 rotatably drive while interposing the rehabilitating pipe 10A and the plastic strip 100 adjacent to the rehabilitating pipe 10A. In accordance with this, the plastic strip 100 continued to the latter end of the rehabilitating pipe 10A is newly drawn into the introduction unit 5.

In the introduction unit 5, the rehabilitating pipe 10A, that is, the joint convex portion 103 of the subsequent spiral plastic strip 100 is adjacently disposed from the inner peripheral side to the joint concave portion 105 of the preceding spiral plastic strip 100. The side edge portion of the substrate 101 at the side where the joint convex portion 103 of the subsequent plastic strip 100 is disposed is positioned at the step portion 104 of the preceding plastic strip 100, and both are joined together. Furthermore, the rib 102 at the side where the joint convex portion 103 of the subsequent plastic strip 100 is disposed is locked to the inclined rib 106 of the proceeding plastic strip 100 (see FIG. 15(a) and FIG. 15(b)).

Continuous driving of the hydraulic motor 45 of the drive unit 4 allows the inner drive roller 41 and the outer drive roller 42, which rotatably drive in the mutually opposite directions, to interpose the joined plastic strip 100, namely, the rehabilitating pipe 10 together with the starting rehabilitating pipe 10A, or interpose the rehabilitating pipe 10. Then, the rehabilitating pipe 10 added to the starting rehabilitating pipe 10A is sent out to the arrival side manhole 93 while rotating.

When the drive unit 4 sends out the rehabilitating pipe 10, the subsequent part of the plastic strip 100 is newly drawn into the introduction unit 5. The introduction unit 5 positions and joins the joint convex portion 103 at the subsequent part of the plastic strip 100 to the preceding part of the plastic strip 100, that is, the joint concave portion 105 of the plastic strip 100 that has become the rehabilitating pipe 10.

During this process, as illustrated in FIG. 9 and FIG. 10, the subsequent plastic strip 100 is guided to the guide member 6, and the plastic strip 100 is continually supplied through a route that passes through the inner peripheral side on the outer extension of the rehabilitating pipe 10. In a process that the subsequent plastic strip 100 is sent to the front of this supply route, the subsequent plastic strip 100 is sent to the preceding plastic strip 100 from the inner peripheral side, and the plastic strip 100 is spirally aligned. Thus, the plastic strip 100 aligned in this way is always joined from the inner peripheral side of the preceding plastic strip 100 to form the rehabilitating pipe 10. This rehabilitating pipe 10 is sent out in the existing pipe 91 with the drive unit 4.

In the winding machine 1, the driving source is only the hydraulic motor 45 of the drive unit 4. In the winding machine 1, a complicated control structure to synchronize a plurality of hydraulic motors is not required. In view of this, the winding machine 1 can be constituted by an extremely simple structure. Accordingly, the winding machine 1 can be manufactured at a low cost. Further, the introduction unit 5 does not include a power portion such as a motor; therefore, the plastic strip 100 is not excessively supplied to the drive unit 4. The supply amount and the supply speed of the plastic strip 100 are preferably maintained. Accordingly, excessive supply of the plastic strip 100 is prevented, the situation where the pipe diameter of the rehabilitating pipe 10 gradually increases is avoided.

Additionally, in the winding machine 1, a braking force that reduces the driving force of the hydraulic motor 45 does not occur. This prevents the situation of an increase in the pipe diameter of the rehabilitating pipe 10 due to a lack of braking force. Furthermore, all driving force of the drive unit 4 can be utilized to send the rehabilitating pipe 10. Accordingly, the length of the rehabilitating pipe 10 formed at a time can be increased compared with the conventional apparatus.

The rehabilitating pipe 10 is manufactured while always contacting the existing pipe 91, which curved shape unevenly. A vibration caused by shaking of the rehabilitating pipe 10 in the lateral direction is transmitted to the winding machine 1. Accordingly, the rehabilitating pipe 10 is attempted to move vertically, horizontally, or other directions with respect to the secured winding machine 1. The winding machine 1 supports the rehabilitating pipe 10 by interposing it at two portions, which are a position of the inner drive roller 41 and the outer drive roller 42 of the drive unit 4 and a position of the inner roller 51 and the outer roller 52 of the introduction unit 5. Accordingly, the winding machine 1 can reduce vertical and horizontal movements of the rehabilitating pipe 10. Thus, slipping out of the rehabilitating pipe 10 from the drive unit 4 by a swinging movement in vertical and horizontal directions can be avoided.

When the rehabilitating pipe 10 is formed, the rehabilitating pipe 10 is manufactured by winding the plastic strip 100 at the periphery of the roller 3 of the frame 2. Thus, the inner diameter of the rehabilitating pipe 10 is always regulated. Accordingly, the plastic strip 100 can be joined from the inner peripheral side of the adjacent plastic strip 100, and therefore the nuisance of a gradual decrease in the pipe diameter of the rehabilitating pipe 10 does not occur.

The winding machine 1 includes the drive unit 4 and the introduction unit 5 at the position above the horizontal surface that passes through the axial center of the existing pipe 91. That is, as illustrated in FIG. 10, the drive unit 4 and the introduction unit 5 are disposed at a position above the horizontal surface H including the axial center of the frame 2 and the axial center of the rehabilitating pipe 10. In view of this, when the winding machine 1 is installed to the invert pit 95 of the manhole 92, the drive unit 4 and the introduction unit 5 do not interfere with the invert pit 95. Accordingly, work such as cutting of the invert pit 95 and the periphery of the invert pit 95 and repair of the cut part is not necessary. Accordingly, the installation work and the clearance work of the winding machine 1 can be performed efficiently, thus shortening a work period.

As a result, with the winding machine 1 of a simple structure, the rehabilitating pipe 10 with the desired set pipe diameter can be smoothly formed. The rehabilitating pipe 10 longer than the conventional rehabilitating pipe can be manufactured at a time.

As described above, after the rehabilitating pipe 10 is formed across the whole length of the region to be rehabilitated at the existing pipe 91, the plastic strip 100 at the end portion of the rehabilitating pipe 10 is cut off, and the winding machine 1 is disassembled and cleared from the starting side manhole 92. Then, the pipe manufacturing work is completed.

The above-described embodiment describes the case where the joint concave portion 105 of the preceding plastic strip 100 and the joint convex portion 103 of the subsequent plastic strip 100 in the introduction unit 5 are mutually positioned and joined. The winding machine 1 and the winding method according to the present invention is not construed in a limiting sense. The plastic strip 100 is not necessarily to be joined.

For example, if the plastic strip 100 is drawn into the winding machine 1, the plastic strip 100 is brought up from the drum 94. At this time, at the position near the manhole 92, the operator may adjust the extraction amount of the plastic strip 100 from the drum 94 to match it to the amount of pipe to be manufactured. The plastic strip 100 is elastically deformed to a predetermined curvature radius by being wound and stacked to the drum 94. Therefore, it is difficult for the operator to supply the appropriate amount of the plastic strip 100 according to the amount of the rehabilitating pipe 10 to be manufactured.

If the supply amount of the plastic strip 100 becomes short with respect to the amount of the rehabilitating pipe 10 to be manufactured, the joint convex portion 103 of the subsequent part of the plastic strip 100 brought up from the drum 94 moves to the center direction away from the joint concave portion 105 of the preceding plastic strip 100, with respect to the preceding plastic strip 100 of the rehabilitating pipe 10. There is a possibility that the plastic strips 100 may not be joined. However, even in this case, the large diameter roller 521 of the outer roller 52 of the introduction unit 5 is disposed between the ribs 102 of the plastic strip 100 at the subsequent part. The large diameter roller 521 positions the subsequent plastic strip 100 such that the joint convex portion 103 of the subsequent plastic strip 100 faces the joint concave portion 105 of the preceding plastic strip 100 (the rehabilitating pipe 10). Then in the state, the plastic strip 100 is sent out to the drive unit 4.

Accordingly, with the subsequent part of the plastic strip 100 aligned with the preceding part, the plastic strip 100 is drawn into the drive unit 4. The inner drive roller 41 and the outer drive roller 42 of the drive unit 4 interpose these plastic strips 100 adjacent to one another. This ensures joining of the joint concave portion 105 and the joint convex portion 103 of the plastic strip 100, thus forming the rehabilitating pipe 10. Accordingly, the drive unit 4 forms the rehabilitating pipe 10, and sends out the rehabilitating pipe 10 forward while rotating it.

With a winding method according to the present invention, a position where the winding machine 1 is to be installed may be at the opening end portion of a vertical shaft or the existing pipe 91 as well as inside of the manhole 92.

### Other Embodiments

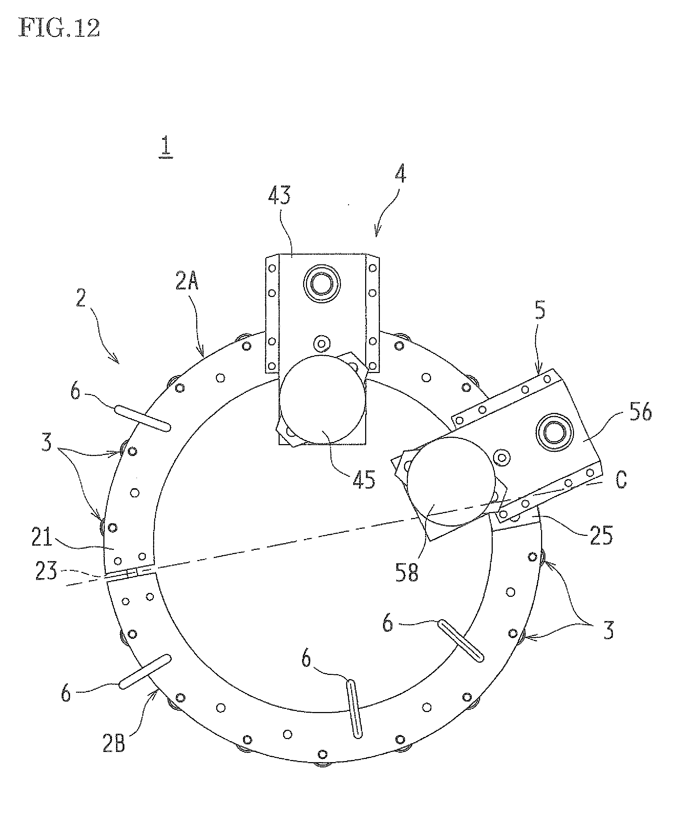

The winding machine 1 and a winding method according to the present invention can be embodied and practiced in other different forms as well as the above-described embodiment. Accordingly, the present invention is not limited to the above-described embodiment, and, for example, the constitutions illustrated in FIG. 12 to FIG. 14 may be applicable.

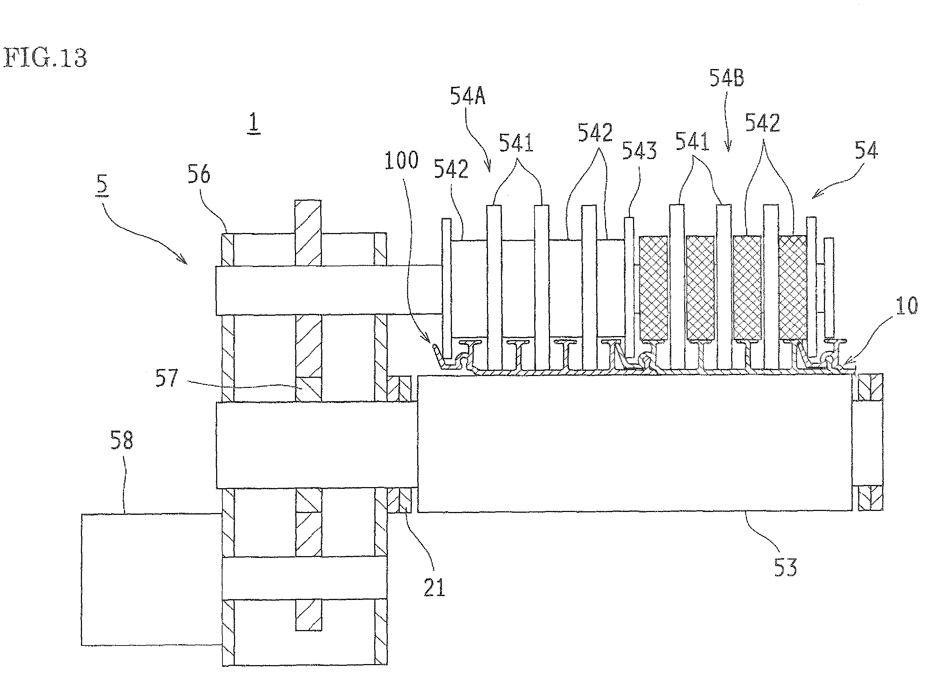

The winding machine 1 illustrated in FIG. 12 and FIG. 13 include the introduction unit 5 that includes a reducer (for example, a gear 57 of a gear box 56) and a hydraulic motor 58 to rotate and drive the rotating shafts of an inner roller 53 and an outer roller 54. This rotatably drives the inner roller 53 and the outer roller 54 in mutually opposite directions.

As illustrated in FIG. 13, the rotating shaft of the inner roller 53 and the rotating shaft of the outer roller 54 are each rotatably supported to the gear box 56 along with an output shaft of the hydraulic motor 58. When the hydraulic motor 58 is rotatably driven, gears 57, which are secured to the output shaft, the rotating shaft of the inner roller 53, and the rotating shaft of the outer roller 54 and engage one another, and rotate the inner roller 53 and the outer roller 54 in mutually opposite directions. The inner roller 53 and the outer roller 54 interpose the plastic strip 100 and spirally align the preceding part and the subsequent part of the plastic strip 100.

In the introduction unit 5, the outer roller 54 is configured to not transmit power to the subsequent part of the plastic strip 100. In the exemplary embodiment, the outer roller 54 includes a roller 54A and a roller 54B. The roller 54A is disposed at approximately a half portion closer to the gear box 56 at the outer roller 54. That is, the roller 54A is disposed to the position where the subsequent part of the plastic strip 100 is positioned between the roller 54A and the inner roller 53.

The roller 54A and the roller 54B include, similarly to the outer roller 52, a plurality of large diameter rollers 541 and a plurality of small diameter rollers 542. Among these, the diameter of the roller 54A is reduced such that the outer diameter of the small diameter roller 542 does not contact the rib 102 of the plastic strip 100. Further, knurling is not performed on the outer peripheral surface of the small diameter roller 542 of the roller 54A, and the outer peripheral surface is formed to be a smooth surface. This allows the roller 54A and the inner roller 53 to interpose the plastic strip 100 without transmitting rotation drive force to the plastic strip 100. In contrast to this, the roller 54B has a constitution where knurling is performed on the outer peripheral surface of the small diameter roller 542, and the roller 54B interposes the preceding part of the plastic strip 100 with the inner roller 53 and transmits rotation drive force.

In the winding machine 1 according to this embodiment as well, the plastic strip 100 is not excessively supplied to the drive unit 4. As a result, the supply amount and the supply speed of the plastic strip 100 are preferably maintained. The situation where the pipe diameter of the rehabilitating pipe 10 gradually increases is avoided, thus enabling accurate manufacture of a pipe while maintaining a uniform pipe diameter.

As the introduction unit 5 with a constitution where power is not transmitted at least to the subsequent part of the plastic strip 100, a bearing may be interposed between the roller 54A and the rotating shaft of the outer roller 54. Similarly, a bearing may be interposed between the inner roller 53 and the rotating shaft.

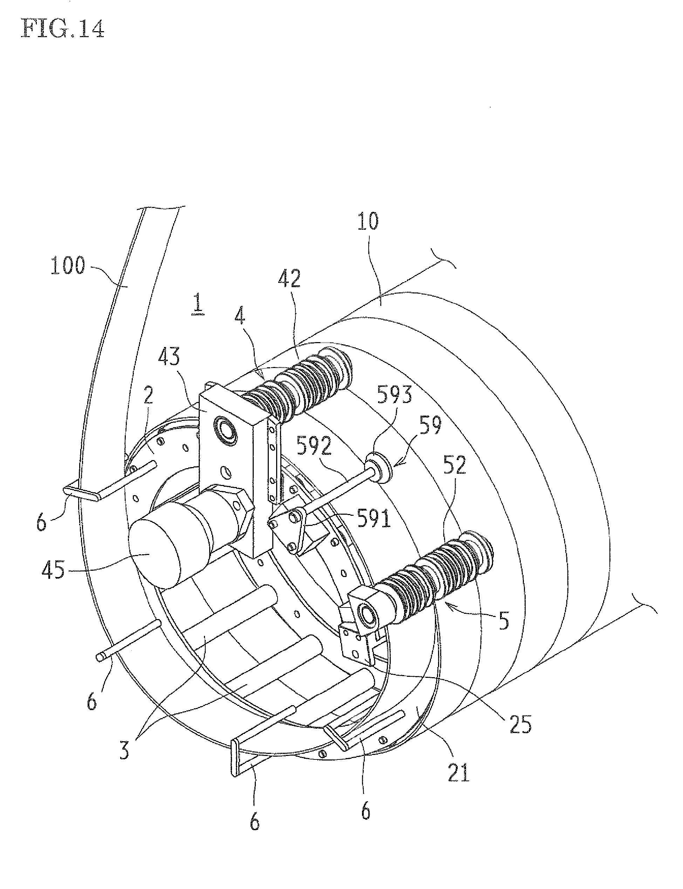

The winding machine 1 according to the present invention may be an embodiment illustrated in FIG. 14. This winding machine 1 includes an auxiliary roller 59 to further securely join the preceding part and the subsequent part of the plastic strip 100. The auxiliary roller 59 is disposed between the introduction unit 5 and the drive unit 4 of the frame 2.

The auxiliary roller 59 includes a base portion 591 attached to the frame 2, a shaft portion 592, and a disk-shaped roller 593. The shaft portion 592 extends from the base portion 591 to the outer peripheral surface of the frame 2. The roller 593 is rotatably supported by the shaft portion 592. The roller 593 has a common outer diameter with a large diameter roller 543 illustrated in FIG. 13. The roller 593 positions the plastic strips 100 at the border adjacent to one another and presses a sub joining portion. That is, the roller 593 engages the inclined rib 106 of the plastic strip 100 at the preceding side with the rib 102 of the plastic strip 100 at the subsequent side (see FIG. 15(b)).

As described above, the introduction unit 5 positions the plastic strips 100 such that the preceding part and the subsequent part of the plastic strips 100 are allowed to be mutually joined, and mutually joins them together. At this time, in the introduction unit 5, as illustrated in FIG. 15(a) and FIG. 15(b), the joint convex portion 103 of the plastic strip 100 at the subsequent side is engaged to the joint concave portion 105 of the plastic strip 100 at the preceding side from the inner peripheral side (the main joining portion). However, the rib 102 of the plastic strip 100 does not have to be locked and joined to the inclined rib 106 of the preceding plastic strip 100 (the sub joining portion). In the introduction unit 5, the plastic strip 100 where the main joining portion has been joined is sent out along the frame 2 and reaches the auxiliary roller 59. At the auxiliary roller 59, the sub joining portion of the plastic strip 100 is pressed by the roller 593, and the preceding part and the subsequent part are securely joined together. This allows secure and strong joining between the adjacent plastic strip 100, thus forming a highly reliable rehabilitating pipe.

Thus, in the winding machine I illustrated in FIG. 14, the plastic strip 100, which passes through the introduction unit 5 and the auxiliary roller 59 and is securely and strongly joined, is sent out to the drive unit 4. In the drive unit 4, the inner drive roller 41 and the outer drive roller 42 interpose and capture the rehabilitating pipe 10 in a state after joining and provide rotational force to the rehabilitating pipe 10. This securely transmits the rotational force to the rehabilitating pipe 10. The rehabilitating pipe 10 is smoothly pushed from the winding machine 1 disposed at the end portion of the pipe line to be rehabilitated in the pipe axial direction.

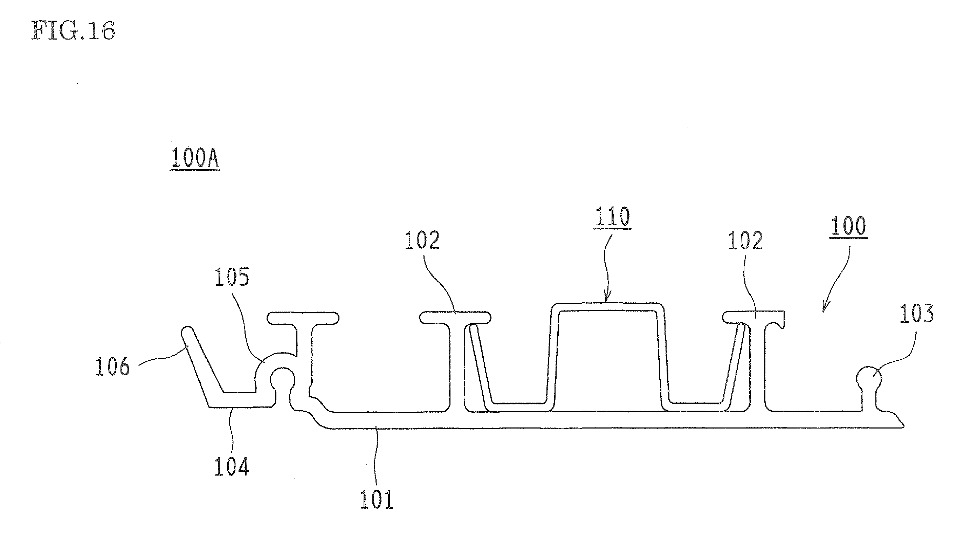

Additionally, in the winding machine 1 and the winding method according to the present invention, the plastic strip 100 constituting the rehabilitating pipe 10 is not limited to the plastic strips 100 illustrated in FIG. 15(a) and FIG. 15(b), for example, the embodiment illustrated in FIG. 16 is also applicable. In this plastic strip 100A, a reinforcing material 110 made of a mental plate is attached across a plurality of ribs 102. The reinforcing material 110 is formed by bending a strip-shaped steel plate in an approximately W shape in the cross section or similar shape.

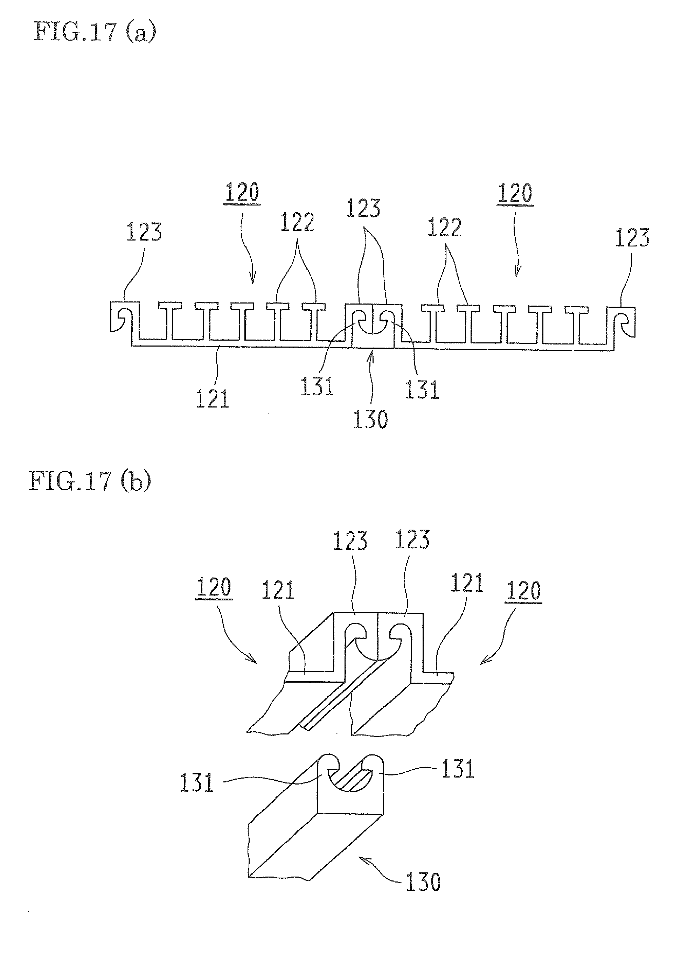

As illustrated in FIG. 17, a plastic strip may have a constitution where adjacent main plastic strips 120 are joined together with a joining material 130 to form a rehabilitating pipe. The main plastic strip 120 includes a plurality of ribs 122, which each have a T shape in the cross section at a substrate 121, and grooves 123. The grooves 123 are formed at both end portions of the substrate 121. The joining material 130 includes fit protrusions 131 that engage the groove 123 of the main plastic strip 120.

The present invention can be embodied and practiced in other different forms without departing from the spirit and essential characteristics of the present invention. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein. The present application is based on Japanese Patent Application No. 2011-024122, the content of which is hereby incorporated.

### INDUSTRIAL APPLICABILITY

The present invention is effectively utilized to a winding machine and a winding method where a rehabilitating pipe is formed employing a plastic strip.

### DESCRIPTION OF REFERENCE SIGNS

- 1: winding machine
- 2: frame
- 21: ring-shaped plate
- 3: roller
- 4: drive unit
- 41: inner drive roller
- 42: outer drive roller
- 44: gear
- 45: hydraulic motor
- 5: introduction unit
- 51: inner roller
- 52: outer roller
- 6: guide member
- 7: cradle
- 10: rehabilitating pipe
- 100: plastic strip

## Claims

1. A winding machine for forming a rehabilitating pipe by spirally winding a plastic strip, comprising:
a frame that includes a plurality of plates and a plurality of rollers, the plurality of plates coupling one another in a circumferential direction, the plurality of plates being combined in approximately ring shape, the plurality of rollers being rotatably disposed between the plates facing one another, the frame being separable into a plurality of pieces;
an introduction unit disposed at the frame, the introduction unit including an inner roller and an outer roller, the inner roller and the outer roller interposing a preceding part and a subsequent part of the plastic strip in a spirally aligned state, the inner roller and the outer roller including a roller portion, the roller portion not transmitting power at least to the subsequent part of the plastic strip;
a drive unit disposed at the frame, the drive unit including an inner roller and an outer roller, the inner roller and the outer roller interposing a preceding part and a subsequent part of the plastic strip in a joined state, the inner roller and the outer roller transmitting power to the plastic strip; and
at least one guide member disposed at the frame, the guide member guiding the plastic strip, wherein
the introduction unit and the drive unit are disposed above a horizontal surface including a axial center of the frame.

2. The winding machine according to claim 1, wherein
the introduction unit is configured to:
position the plastic strip such that the preceding part and the subsequent part of plastic strip are mutually joined together; or
position the preceding part and the subsequent part of the plastic strip in the position and mutually join the preceding part and the subsequent part together.

3. The winding machine according to claim 2, wherein
the introduction unit and the drive unit are disposed so as to arrange the drive unit after the introduction unit along a supply route of the plastic strip, and
the drive unit draws the subsequent part of the plastic strip through the introduction unit.

4. The winding machine according to claim 1, wherein
the drive unit includes a reducer and a motor, the drive unit rotating two rollers in mutually opposite directions.

5. The winding machine according to claim 1, wherein
the guide members are disposed at a plurality of positions at the frame so as to define a supply route of the plastic strip at an inner peripheral side of the outline of the frame.

6. The winding machine according to claim 1, comprising
a cradle that supports the frame in a state where the frame is suspended.

7. The winding machine according to claim 1, wherein
the frame includes a first adjustment mechanism, the first adjustment mechanism being disposed on at least one portion among coupling portions between the plates, the first adjustment mechanism adjusting a distance between the plates in a circumferential direction.

8. The winding machine according to claim 1, wherein
the frame includes a second adjustment mechanism at one portion among coupling portions between the plates, the second adjustment mechanism adjusting a gap axially of the mutual plates.

9. A winding method by forming a plastic strip into a rehabilitating pipe, comprising:
installing a winding machine at an end portion of a pipe line to be rehabilitated, the winding machine forming and rotating the rehabilitating pipe; and
supplying a plastic strip to the winding machine, the plastic strip being supplied through a route that passes through an inner peripheral side on an outer extension of the rehabilitating pipe, wherein
in a process where the plastic strip is sent forward of the supply route, the method further comprising:
sending a subsequent part of the plastic strip to the preceding part of the plastic strip from the inner peripheral side of the preceding part and aligning the preceding part and the subsequent part spirally;
joining the subsequent part from the inner peripheral side of the preceding part of the aligned plastic strip to form a rehabilitating pipe; and
sending out the rehabilitating pipe in the pipe line by rotating the rehabilitating pipe while drawing the subsequent part of the plastic strip to the winding machine.

10. The winding method according to claim 8, wherein
the plastic strips include a main joining portion and a sub joining portion, wherein
the method includes:
mutually joining the preceding portion and the subsequent portion together from an inner peripheral side of the plastic strip; and
subsequently joining the main joining portion and the sub joining portion together.
